# EUROPEAN PATENT APPLICATION

(11) **EP 2 487 109 A1**
(43) Date of publication of application: **15.08.2012**
(21) Application number: 11001163.2
(22) Date of filing: 14.02.2011
(51) Int. Cl.: B64D 11/00, B64D 11/06, H01R 25/14, H04B 3/52

(54) **Seat rail coupling**

(71) Applicant: PFW Aerospace AG, 67346 Speyer (DE)
(72) Inventor: Kaufmann, Andreas, 67346 Speyer (DE); Christ, Andreas, 79110 Freiburg (DE); Feldhauer, Tobias, 77797 Ohlsbach (DE); Schüssele, Lothar, 77948 Friesenheim (DE); Klausmann, Tobias, 79215 Biederbach (DE); Weber, Christian, 77790 Steinach (DE)
(74) Representative: Hörschler, Wolfram Johannes

(57) **Abstract**

The present invention relates to a supporting structure, particularly a seat rail (18), to which passenger seats (10) are mounted. Said seat rail (18) has a wave guide (28) for wireless transmission of data signals (42, 46) in at least one direction, said seat rail (18) comprising openings (32) for the transmission of data signals (42, 46). A wave guide (28) of the seat rail (18) and a coupling wave guide (64) establish a wireless data connection between said supporting structure (18) and said passenger seat (10).

## Description

### Background of the invention

US 2004/0048582 A 1 discloses a device for transmitting signals and/or energy. A device is disclosed for transmitting at least one signal or a kind of energy between a first electrical device on/or in a body of a vehicle and a second electrical device on/or in a seat of a vehicle, the vehicle having a rail system for the vehicle seat. A first transmission module is assigned to the first electrical device and a second transmission module is assigned to the second electrical device, the first and the second transmission modules forming a highfrequency wireless transmission path, the first transmission module being situated on/or the vehicle body and being integrated into the rail system. The second transmission module is situated on/or in the vehicle seat and being adapted to be coupled into the rail system in such a way, that at least one of the signal and energy transmission occurs via a displacement currently generated in the rail system.

WO 2004/052689 A1 is related to a transmission for seats movably disposed on a chassis.

The document is related to an arrangement for transmitting data and/or power between a chassis and a seat that is movably disposed on that chassis by means of a guide rail. Several primary coils support at least one primary winding arranged in a fixed manner within the guide rail while at least one secondary coil comprising one secondary winding is placed on the seat rail. The primary coil is disposed within the guide rail in such way that at least one primary and one secondary coil are positioned relative to each other so as to transmit data and/or power data and/or power.

US 5,363,464 is related to an electrical or conductive wave guide. An electrical or conductive wave guide is disclosed including an electric housing having a longitudinal access and central shell. A conductive layer is fixed to an inner surface and/or the outer surface of the housing to confine an electromagnetic radiation within the wave guide. Rips positioned in a channel may be used to further confine radiation. Sections of wave guides may be used to combine connectors. A local area network can be formed using a plurality of sections of the wave guides, computers and bi-directional couplers.

US 2005/0258676 A1 is related to a passenger cabin seat power buzz. According to this solution, a system is disclosed for distributing signals to a plurality of seats that are mounted to seat track at a floor surface, the seat track having a plurality of spaced apart openings. A conductive buzz is mounted beneath the floor surface and extends along each of said seats, said buss, operable to conduct signals along an entire length of said buzz. A connector is adapted to plug into said buzz through one of said openings in said seat track so as to extend to a point below the floor and approximate a seat. Said buzz is operable to permit operation with said connector at substantially any point along the length of said buzz. A passenger cabin system is disclosed for distributing signals throughout a passenger cabin. A passenger cabin floor is provided as well as a set track, extending across said floor, said seat track being mounted on a subfloor that is located beneath said floor, said seat track having a plurality of openings extending therethrough. One or more passenger seats are mounted to said track at said floor. A conductive buzz is mounted to said subfloor between said subfloor and said floor, said buzz operable to conduct said signals along substantially the entire length of said seat tracks.

In aeroplanes, particularly aeroplanes for the transport of passengers, seat rails are used, which serve the purpose to fasten passenger seats individually according to a certain seat pattern within the passenger cabin. Said seat rails are being mounted according to the different widths of a body of an aeroplane such as a "narrow body" or a "wide body"-aeroplane. Depending on the different comfort classes, such as first class, business class or economy class, the passenger seats of the respective classes offer a larger or narrower space for each of the passengers and further offer a different variety of entertainment facilities and programs particularly on long distance flights.

Particularly on those aeroplanes for the transport of passengers over long distances, the entertainment systems to be arranged on each of said passenger seat such as in-seat video, ear-phones, TV-channels and internet connecting devices have an enormous importance nowadays concerning the comfort levels in view of the cargo fares of each passenger for long distance flights. Passengers, who have to endeavour a long distance flight of about twelve hours and even over that usually have a high demand concerning the comfort regarding the choice of entertainment programs on board of the aeroplane. Depending on the seat pattern of the individual seats placed in first class, business class or economy class, it has to be made sure that within a passenger aero plane, entertainment systems have to be configured individually - taking into account the different comfort classes ― on each of said individual passenger seat located in either the first class, business class or economy class sections.

Nowadays, signal transmitting wires are used and coupled to each of the individual passenger seats either arranged in the first class compartment, the business class compartment or the economy class compartment of the passenger cabin.

The data transfer to the respective seats of the different comfort classes according to the class pattern of the passenger cabin of a passenger aircraft is performed by data wires which are provided beneath the cabin floor of the passenger cabin. Each seat has an individual wire package by means of which the data is transferred to the respective seat. Data wires are normally made of copper and allow for providing different TV-channels for the entertainment system provided on each individual seat so that the respective passenger may choose its individual seat entertainment independent from the passenger seated adjacent or in front or in the back of him/her. By means of said data wires electrical data is transmitted - for instance during long distance flights - parts of the passenger seats such as arm rests and back rests being electrically adjustable. Said data wires are suitable for transmission signals to each individual seat located in the passenger cabin. This means that kilometres of wire such as data wire and energy transmitting wires are necessary for a passenger airplane particularly for a passenger airplane suitable for long distance flights. All these data wires have to be isolated versus each other and have to be arranged beneath the passenger cabin floor such that neither the occurrence of breakdowns of data wires, i.e. undesired interruption, nor a heat development are to be envisaged. To prevent the occurrence of this, at least one layer of isolation is necessary for the data transmitting as well as for the energy transmission of the transmitting wires. Given the weight of the wires alone, this already constitutes a considerable weight factor. The weight is still increased by the application of the at least one insulation around each of the wires, so that consequently, the comfort requirements for the passenger seat come along with solutions according to the prior art that increase the weight of the airplane significantly since the wire is necessary to transmit the individual entertainment program to the individual passenger seats.

### Summary of the invention

The object of the present invention is to provide for a signal transmitting seat rail, particularly for a passenger aircraft, said seat rail providing a transmission of signals by the material of the seat rail itself without requiring discrete data wires.

A further object of the present invention is to provide for a data transmission system in a passenger cabin of a passenger aircraft without making use of individual wires to be arranged beneath the passenger cabin floor to transmit different modes of an entertainment program to each individual seat located in the passenger cabin.

According to the present invention, a supporting structure, particularly a seat rail, comprises a hollow interior having a rectangular, circular or oval cross section to mention but a few, the material walls on top and ceiling thereof and those limiting the side walls thereof serving as a transmission path for data signals to each of the individual passenger seats located within the passenger cabin of an aircraft.

According to the present invention, a data transmission structure is provided according to which a master system comprises a master transceiver which is connected by means of a coaxial connection to a seat rail having a hollow interior. The coaxial connection is connected to that seat rail or part of a seat rail, respectively, by a seat rail-transition area. A part of the seat rail may be connected to adjacently located parts of a seat rail by means of transition areas or may form an end-section of a seat rail located within the cabin floor of a passenger cabin.

At connection sections adjacently arranged individual passenger seats having an individual passenger transceiver, are connected to the sections of the seat rail located within the passenger cabin floor. By the system provided according to the present invention the master system provides data signals to a plurality of individual passenger seats, i.e. participant systems 1- ... n.

According to the present invention, said master system provides for the distribution of an entertainment system, for instance for the first class only, and taking into account some limitations for the business class and still further taking into account further limitations concerning the economy class.

Dependent on the configuration of the master system the distribution of the entertainment system, the number of passenger seats to which said individual entertainment programs such as radio, TV or internet is provided may be well defined according to the different comfort levels in first class, business class and economy class. Said master system is configurable as to serve the different comfort levels in that the entire program and entertainment selection may be offered to those seats located in the first class, a slightly reduced selection may be offered to those passengers seated in seats located in the business class and a limited access to entertainment systems is provided for those passengers seated in the individual passenger seats of the economy class. Instead of a master system for providing an entertainment system for all of the three comfort classes but configured depending on the respective class, it is conceivable, to provide for a master distribution system including a master transceiver for each of the classes, first class, business class and economy class, separately and independent from one another.

Taking into account the solution according to the present invention, in an advantageous embodiment, a bi-directional communication is achievable by means of the present invention. Within one and the same supporting structure such as a seat rail, data communication is established simultaneously in both directions. To give an example of a possible ratio of data sent and received, i.e. the data sent from the master system to the individual seat may amount to 80% of the entire data volume, whereas the data received from the master system from an individual seat may amount to a percentage of approximately 20%, depending on the capacity of the master system. This asymmetrical transport data volume establishes one larger advantage of the system according to the present invention.

Given that two seat rails are provided oriented substantially parallel to one another, one of said seat rails optionally may be used as a data signal channel in a first direction and the parallel extending seat rail may be used in reverse direction, i.e. the second direction opposite to the first direction In the alternative, sending of data signals and receiving data signals may be performed in one seat rail only. In this case, said second seat rail establishes redundancy since the second seat rail has the same configuration as compared to the first seat rail. Thus, the second seat rail not used to serve the purpose of redundancy and said second seat rail can be used either as only sending seat rail or only receiving seat rail.

According to the present invention the first frequency band is used for the emitting-mode and a second frequency band is being defined for the receiving mode only. Since said frequency bands are different from each other, no interferences will occur during simultaneous operation of individual passenger systems, i.e. a simultaneous use of said individual seat entertainment systems by individual passengers at the very same time.

In an optional embodiment of the present invention different band widths are being implemented in terms of the use of the data signals for transmission in a first direction and for the reverse data transmission in a second direction. By means of choosing different download/upload bandwidths no interferences and no dependencies between individual seat entertainment systems will occur during a simultaneous use of said entertainment systems by individual passengers.

The seat rail constitutes a component of network, such as a local area network (LAN) when connected to the master system on the one hand and to the individual passenger seats on the other hand. Still further, it is conceivable to have different seat rails being connected with one another to establish groups of seat rails interconnected to each other. In principle, each passenger is participant of said network (LAN) so that single individual passengers communicate with one another directly or would communicate, i.e. sending data to the master system.

In an alternative embodiment, the individual transceivers, assigned to the passenger systems could be defined as receivers only, to create a simple broadcasting system within the entertainment system of individual passenger seats located within the passenger cabin. Said seat rail could either be used for transmission of controlling signals, sensor data or information concerning the individual status of the operating state of rows of seats, of toilets or kitchens to mention but a few. By the use of the seat rails as a structure for transmitting control signal sensor data and messages concerning the status of systems, the passenger cabin as well as a cargo compartment could be connected to the system. In an alternative embodiment, a number of wave guides are integrated to one seat rail. This allows for the implementation of different cross sections of each of the number of wave guides which in turn allow to provide different frequency bands within the data transmitting system. The wave guide could for instance have a rectangular shaped cross section; on the other hand other geometries are conceivable as well. If in one embodiment, the wave guide should comprise a number of cross sections, said cross sections each could adopt a different geometry. Thus, a separation of data packages signals in the receiving or sending mode corresponding to the different cross section geometries is achieved. According to the solution of the present invention a much weaker emitting power for the data signals to be distributed within the entertainment system is used compared to the solutions according to the prior art.

There is minimal radiation into the passenger cabin since the wave guides establish an almost closed loop system and emissions at very low levels only, particularly those emissions and radiations into the passenger cabin. Provided that a mechanical failure of a seat rail occurs, the entertainment system will automatically be shut off to prevent radiation into the passenger cabin immediately. A method for modulation is implemented particularly a multi carrier modulation method such as Coded Orthogonal Frequency Division Multiplex (COFDM) but is not limited thereto. Still further, the use of a time multiplexing method for the transmission of data signals is conceivable as well. According to the present invention it is conceived, to provide for an Ethernet-DVB-T, or DVB-C bridge to provide for Ethernet or a local area network (LAN) to be implemented into a component of which said supporting structure is.

It has to be emphasized that a very advantageous aspect of the solution according to the present invention is the use of low electrical power transmitting the data from the master system into the individual seat rails being ten times lesser than the transmission power used in a Wireless LAN (WLAN) and even hundred-fold lesser than compared to the use of a cellular phone or a mobile phone.

### Brief description of the drawings

The present invention is described in more detail with respect to the accompanying drawings, in which:
Figure 1 shows a passenger seat arrangement on a cabin floor of a passenger aircraft, individual passenger seats fastened parallel to one another extending seat rails,
Figure 2 shows a coupling of a passenger seat structure to said seat rails, having a hollow interior,
Figure 3 shows the general signal paths through various components,
Figure 4 shows a coupling between an amplifying unit and a hollow vertically extending conductor of a respective passenger seat structure,
Figure 5 shows a top view of a seat rail with respective openings for data transmittal and,
Figure 6 shows a schematical view of a connection for the coupling in and coupling out of data into the wave guide and the distribution thereof,
Figure 7 shows a scheme of a system for distributing in-flight entertainment with a major system and a major transmitter and a number of individual passenger participants 1 - ...n according to the present invention.

### Preferred embodiments

The term "supporting structure" comprises a seat rail as well as a cargo conveyor used in a cargo compartment of an aircraft, still further stringers used as a component to provide for a higher mechanical rigidity of the wings, which are conceivable as well, as well as any suitable rigid structure used in an aeroplane. Supporting structures such as a seat rail are used in cabin floor equipment of a passenger airplane and are made of aluminium or a titanium/aluminium alloy or the like.

Said supporting structures are preferably made as continuous profiles for example using the extrusion method or coated plastic material or electrically conducting plastic material for instance, serving as rigid structures to increase mechanical strength of a passenger cabin of an aircraft.

Said supporting structures, particularly said seat rails may comprise different portions to be connected with one another in axial direction by means of transition areas. For instance, said supporting structure may comprise two seat rails, substantially arranged parallel to one another, supporting a row respective passenger seats, three or more seats according to the seat pattern in the different comfort classes of the passenger cabin of a passenger aircraft, such as first class, business class and economy class, arranged adjacent to one another.

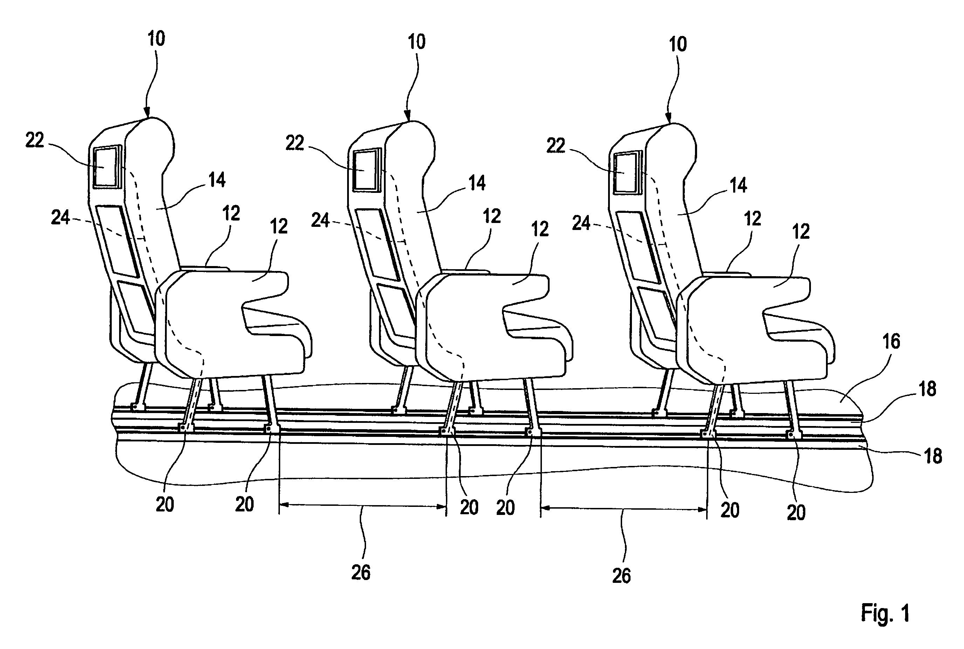

Figure 1 shows the arrangement of the individual passenger seats within the passenger cabin of a passenger aircraft.

As can be derived from the perspective view given in figure 1, a plurality of passenger seats 10 each having an armrest 12 and a respective backrest 14 are mounted by fittings 20 to seat rails 18. Said seat rails 18 constitute the supporting structure according to the present invention. As can be further derived from the perspective view given in figure 1, on each backrest 14 an in-seat entertainment system 22 is integrated. The dashed line labelled with reference number 24 depicts a signal link by means of which data signals transmitted in the hollow interiors of said seat rails 18 is transmitted to each of the in-seat-entertainment system 22 arranged in each of said passenger seats 10. To establish a connection between the an individual passenger seat 10 and the seat rails 18, fittings 20 are used which allow a rearrangement of the passenger seats 10 depending on the comfort requirements, i.e. a distance 26 according to the different comfort class levels, first class, business class and economy class, respectively.

Each of the seat rails 18 extending substantially parallel to one another, comprises a number of server switches or RF-interfaces to connect different portions of said seat rails 18 with one another to allow for a homogeneous, uninterrupted wireless data transmission within the hollow interior of each of said seat rails 18, i.e. each of said supporting structures according to the present invention.

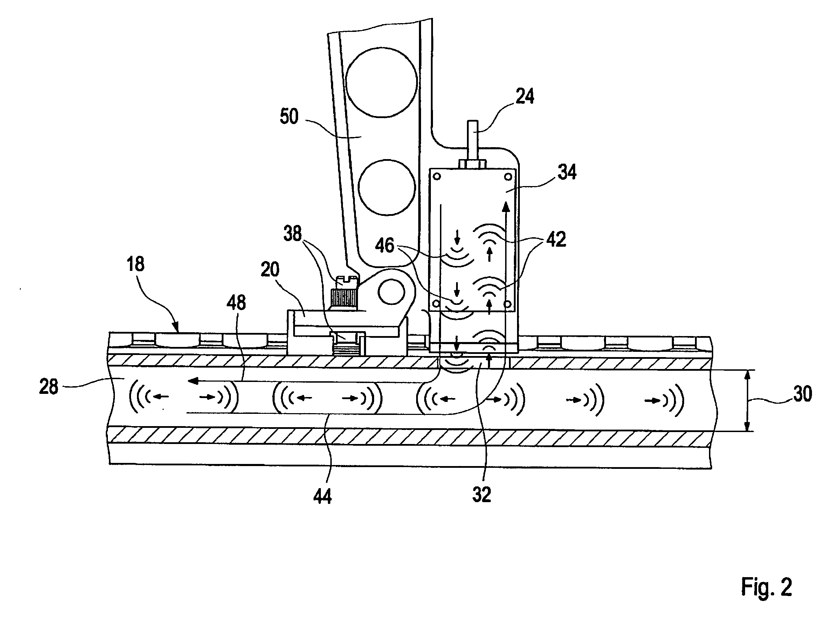

Figure 2 shows a coupling between the supporting structure, particularly a seat rail by means of a fitting to a seat structure of a respective passenger seat in an enlarged scale.

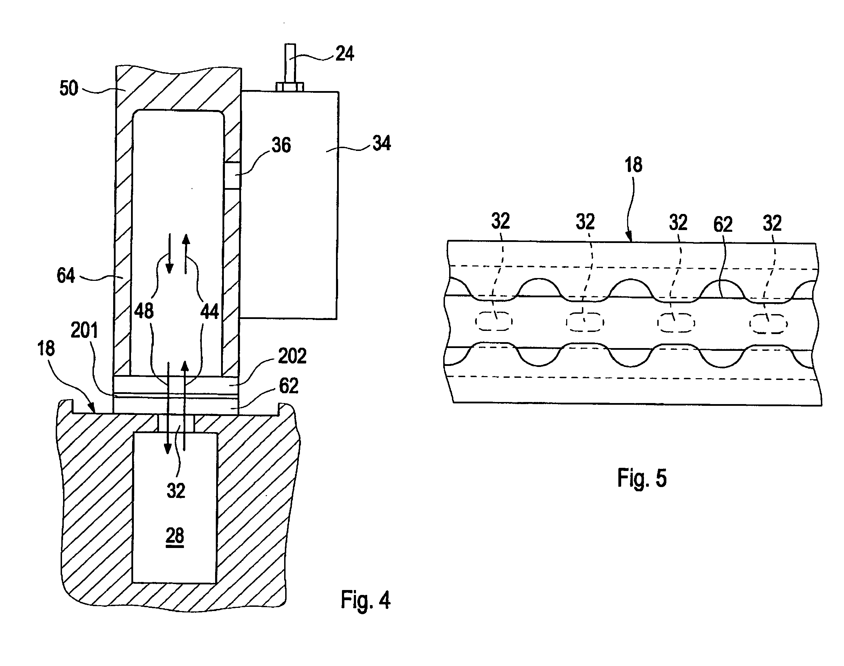

According to Figure 2, said supporting structures, i.e. particularly seat rails 18 comprise a hollow interior 28. The hollow interior 28, i.e. a wave guide, comprises a cross section 30 through which a wireless data transfer to the signal link 24 of each of the respective passenger seats 10, arranged on the cabin floor 16 is established. Within the passenger seat 10, the data signals are transmitted via cable. The wireless data transfer is performed to an antenna or transition section of the coupling wave guide 64 as best shown in fig. 4.

As can be derived from the cross section according to figure 2, in the upper region of said supporting structure, particularly seat rail 18, openings 32 are present in regular intervals with respect to one another. Said openings 32 are being covered by a strip of plastic or a material having dielectric properties (high frequency circuit board material). Said cover serves the purpose to prevent liquid from entering through said openings 32, whereas said openings are opened for the transfer of electromagnetic signals. In an alternative, said not used openings 32 being machined in said seat rails may have an electromagnetic protection, particularly when used for the transfer of energy. Said cover 62 as shown in figure 4 in a perspective view, serves the purpose to prevent liquid from entering into the wave guide 28 of said supporting structures, particularly said seat rails 18 according to the present invention. By means of said openings 32 said wave guide 28 of the supporting structure, i.e. the seat rail 18 is coupled to a hollow substantially vertically extending coupling wave guide 64 as best shown in figure 4.. According to the present invention, the data signal transfer is extending from the wave guide 28 of the respective seat rail 18 via opening 32 into the coupling wave guide 64. That coupling wave guide 64 comprises a transition 36, by means of which an amplifying unit 34, see figure 4, is coupled to the coupling wave guide 64.

As can be further derived from figure 2, said seat structure 50 of a passenger seat 10 not completely shown in figure 2, is coupled to the seat rail 18, i.e. the respective supporting structure by means of a fitting 20. Said fitting 20 may comprise a shear-stud 38 which allows for a reliable mounting of said seat-structure 50 to the upper region of said seat rail 18 on one hand, and which establishes on the other hand, a wireless signal connection by opening 32 between the coupling wave guide 64 and the wave guide 28 of said supporting structure, i.e. particularly said seat rail 18, respectively. As shown in figure 2, packages of data are being transmitted within the cross section 30 of the wave guide 28 of the supporting structure, i.e. particularly the seat rail 18. First data signals 42 assigned to the respective individual in-seat entertainment system 22 according to the selection of the respective passenger are transmitted in a first transmittal direction 44 to the respective amplifying unit 34 assigned in the embodiment according to figure 2 to the seat structure of 50, whereas in a second transmittal direction 48, second data signals 46 are transmitted via the opening 32 into said wave guide 28 of the supporting structure, i.e. said seat rail 18. Said data signal packages 42, 46, respectively, are routed via a respective master of a master system 110,112.

Thus, a bi-directional, i.e. duplex mode COFDM-technique is established for a simultaneous transmittal of first data signals 42 and second data signal 46 at one and the time in both directions, i.e. in a receiving mode to the respective amplifying unit 34, whereas at the same time in a sending mode, second data signal 46 are transmitted to said seat rail, particularly said hollow interior 28 thereof addressed to a master system not given in greater detail here.

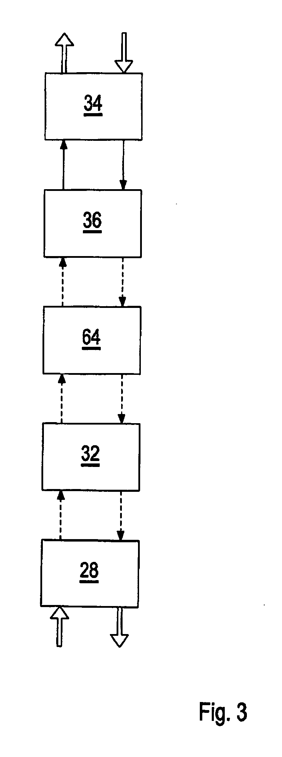

Figure 3 shows general signal paths according to the present invention.

Figure 3 shows in a general manner the coupling between the supporting structure, particularly said seat rail 18 and passenger seat. From said wave guide 28 first data signal packages 42 are being wireless sent via opening 32 to said coupling wave guide 64 and via a data transition area 36 to the amplifying unit 34. The data signal transfer between the transition area and the amplifying unit 34 is established via a fixed connection whereas the dashed lines indicate a wireless data transfer. On the other hand second data signal packages 46 are transmitted from said amplifying unit 34 to said transition area 36, the coupling wave guide 64 via opening 32 into the wave guide 28 established by the hollow interior of the supporting structure, particularly the seat rail.

Figure 4 shows an embodiment of an arrangement of an amplifying unit assigned to a coupling wave guide 64 integrated into the seat structure of an individual passenger seat.

According to the embodiment given in figure 4, the opening 32 on top of the supporting structure, particularly the seat rail 18 is opened. Consequently, a connection between the wave guide 28 of said supporting structure, particularly seat rail 18 and a substantial in vertical direction extending coupling wave guide 24 is established. Thus, as shown in figure 2 a bi-directional data transport of first data signals 42 in a first transmittal direction 44 and a simultaneously performed transport of second data signals 46 into a second transmittal direction 48 is established. As best shown in the cross section according to figure 4, a transition area 36 is established between said coupling wave guide 64 and said amplifying unit 34. The transition area is labelled with reference number 36. As can be derived from Fig. 4 said coupling wave guide 64 is provided with a cover 202 to prevent impurities from entering into the hollow interior thereof. An air gap 201 of a few millimetres facilitates the mounting process and may occur due to manufacturing tolerances.

The amplifying unit 34 comprises a cable connector for connecting the amplifying unit 34 within the signal link24 to the backrest 14 of the passenger seat as shown in figure 1.

Figure 5 shows a top view of a supporting structure, particularly a seat rail.

As can be derived from figure 5, said supporting structure comprises in regular intervals arranged a number of openings 32. Those openings 32 not currently used or closed by a strip-shaped cover 62 made of a material having dielectric properties. The strip-shaped cover 62 serves the purpose to prevent liquids from entering into the wave guide 28 of said seat rails 18. As shown in figure 4, said openings 32 of said supporting structures, particularly said seat rails 18 as well as the lower ends of said coupling wave guides 64 of the passenger seats are being covered by materials 62, 202 having dielectric properties. On the one hand they are protected from liquids during said components, on the other hand said materials 62, 202 allow for the travel of said data signals, i.e. electromagnetic waves. In the alternative, said openings 32 may be covered by means of electromagnetic shielding.

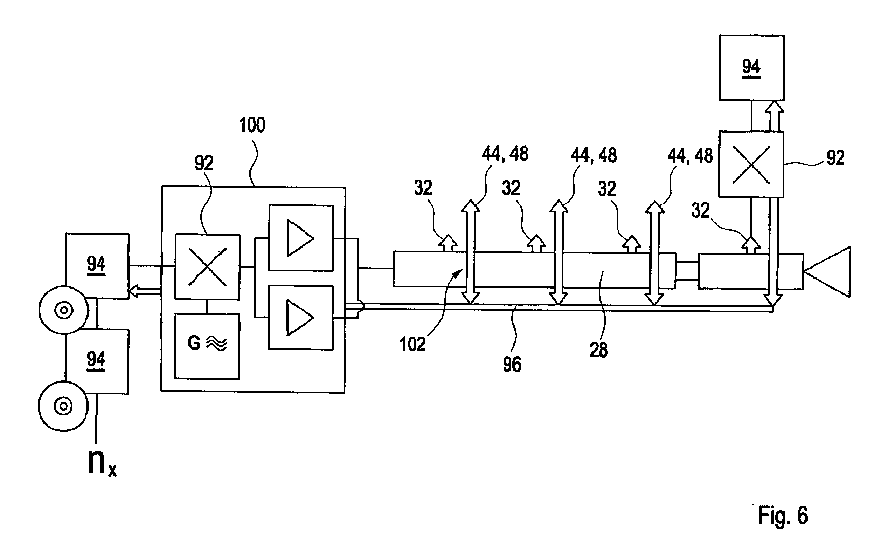

Figure 6 shows a connection scheme of signal entry and signal outlet concerning data signals transmitted within the hollow interior and distribution at individual passenger seats arranged in the passenger cabin.

According to figure 6, the in-flight entertainment system comprises multimedia applications 94 being transmitted within the processor 92 comprising various electronic chips at a signal entry 132. Said data signal coupled into a representing multimedia application 94 is transported via the wave guide 28 comprising said hollow interior. Reference numeral 98 depicts individual signal outlets via openings 32 at which signals are being transmitted to individual passenger seats 10. By means of a bi-directional bus system 102, an exchange of data into the receiving and emitting direction is established within the wave guide 28 and each individual passenger seat 10 connected to said wave guide 28 or a respective section thereof.

Still further, figure 6 discloses a digital modulator 100 comprising a at least one processor g2 and different signal converters allowing for different multimedia applications 94 to be coupled into said wave guide 28 of said supporting structure 18, particularly a seat rail.

Reference numeral 96 identifies a reverse channel which may be formed by one of a pair of supporting structures, particularly seat rails18, onto which the individual passenger seats 18 are mounted at distinct distances with respect to one another. Given the parallel arrangement of two supporting structures 18, particularly seat rails, one of said seat rails 20 may be used as a forward channel, i.e. providing signals to the individual passenger seats 10, whereas the other of the pair of seat rails 18 serves as a reverse channel 96;

Alternatively, it is conceivable, to have the data transfer between the master system 110, 112 and the individual seats 10 in first class, business class and economy class according to the different comfort levels, performed via one single supporting structure 18. i.e. one single seat rail in both directives 44, 48. Therefore, different frequency band width are applicable to separate data signals from one another as well as a partition between the hollow interior 5 of the wave guides 28is conceivable as well. Given the alternative embodiments, the arrangements of a pair of supporting structures 18, arranged substantially parallel to one another is feasible under a view of purposes of redundancy.

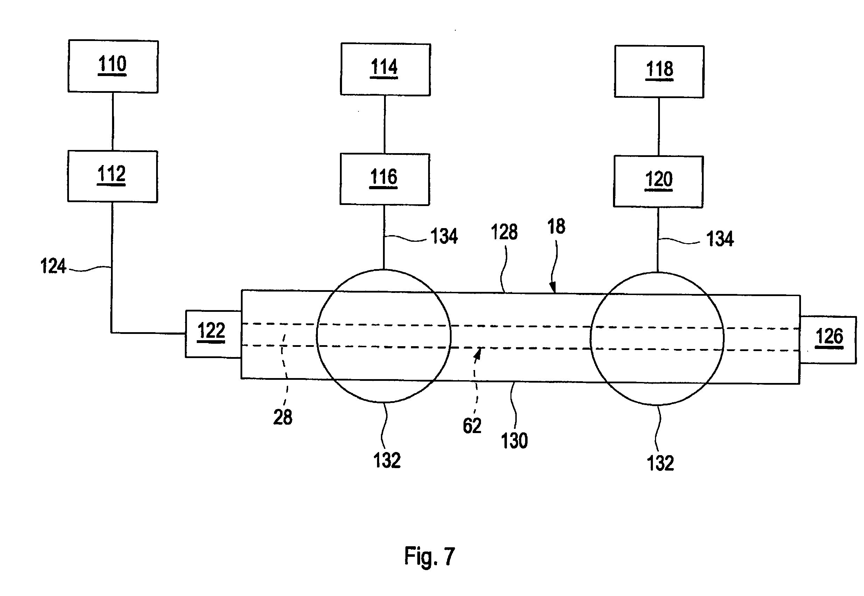

Figure 7 depicts an in-flight entertainment system according to the present invention which is integrated into the support structure, particularly a rail seat 18 comprising said wave guide 28 with a hollow interior extending substantially in axial direction of the supporting structure, particularly the seat rail. Said in-flight entertainment system according to figure 7 comprises a local area network, telemetric devices and the multimedia applications 94 as described in connection with figure 6. The in-flight entertainment system according to the present invention using the data transmission by means of said wave guides 28 and comprises wave guides 64 comprises a master system 110 comprising a transceiver 112. By means of said the master system 110 and a coaxial cable connection 124 the multimedia applications 94 are transmitted to a first transition section 122 which in the embodiment according to figure 7 establishes a signal entry into the hollow interior of said wave guide 28 according to the present invention. According to figure 7, one section of the supporting structure 18, particularly a seat rail, is shown to which at a second transition section 126, i.e. a further section of a supporting structure 18, particularly a seat rail, can be fixed. In the alternative, said second transition section 126 may establish an end portion of a supporting structure 18, particularly a seat rail. As shown in the scheme according to figure 7, a first participant system 114 comprising a transceiver 116 is connected at a connection area establishing a signal inlet 132 and/or a signal outlet 98. At a further signal inlet 132 and/or a signal outlet 98, another participant system "n" having a transceiver "n" is comprised to the wave guide 28 having a said hollow interior according to the present invention. The number of participant systems 1 to n may vary depending on the space available and depending on the length of the sections of the supporting structures 18, particularly seat rails according to the present invention. Still further, the number of participant systems 114, 118 being connected at the signal inlet and/or signal outlets 132, 98, respectively, may vary according to the different comfort requirements, i.e. first class, business class and economy class.

Reference number 128 depicts a top portion of the wave guide 28. A bottom of said wave guide 28 is labelled with reference number 130. Reference numeral 134 depicts a connection to the structure 50 of an individual passenger seat as best shown in figure 1. Said comprises connection, a contact less data transfer via radiation and using said wave guide 28, 64 is feasible by the hollow interior of said wave guides 28, 64.

The in-flight entertainment system as depicted in connection with figure 7 is preferably mounted at a supporting structure 18, particularly a seat rail having two substantially parallel arranged rails allowing for the bi-directional communication. Concerning the bi-directional communication this may be implemented simultaneously in a seat rail system having two substantially parallel arranged supporting structures 18 as well as with in one single supporting structure, i.e. one single seat rail having the purpose of transmitting data a sending and receiving mode concerning the master system 110, 112 and concerning each of the individually arranged passenger seats 10.

A supporting structure 18, particularly seat rails for rows of individual passenger seats 10, is arranged extending substantially parallel to one another. One of said supporting structures, particularly seat rails 18, is used as a forward channel the other of said pair of supporting structures particularly seat rail 18 is used as rearward channel. By this arrangement, a separation of the data transport directions is applicable. A separation of the data transmittal is feasible as well by the choice of different frequency band widths, i.e. to choose one band width reserved for sending only and a differently chosen frequency band for receiving only. Due to the distance between the band widths chosen, no signal interferences will occur upon data transport in both directions of the hollow interior of said wave guide 28 according to the present invention.

The data transport, i.e. the data signal transport in both directions may be established within one supporting structure 18, particularly a seat rail in both directions in a sending mode and in a receiving mode. Still further in an alternative embodiment, two parallel arranged supporting structures 18, i.e. two substantially parallel extending seat rails may be used for purposes of redundancy one being the forward directed channel, one being the reverse channel 96 still further within two supporting structures one of said seat rails 18 may be used in a data sending mode only and the other one in the data receiving mode with respect to the master system only.

The data transfer via one supporting structure of via two supporting structures 18. i.e. in a bidirectional mode is to be applied preferably taking into account that 80% of the data transmitted is sent from the master system to the individually passenger seats, whereas the percentage of about 20% of the data transmitted only is transmitted using the sending mode, i.e. from the individual passenger seats 10 to the respective master system 110, 112.

The supporting structure 18, particularly the seat rail can be part of a network such as a Wireless local area network (WLAN) established within the passenger cabin. A plurality of supporting structures 18, particularly seat rails are part of said network creating the opportunity that each participant is part of said network, i.e. particularly a local area network being able to communicate directly with another or with said master system 110, 112, only. Said master system 110 as well as the participant system 1 - ...n, reference numbers 114 and 118, respectively, each comprise transceivers 112, 116 and 120, respectively. Said transceivers 116 and 120 of the participant systems 114, 118 are suitable to receive data only to create a broadcasting system within the passenger cabin. Said supporting structure 18 particularly embodied as a seat rail serves the purpose to transmit control signals sensor data or status reports of subunits such as seat rows, toilets, and kitchens. Said seat rails 18 allow to establish a data bus serving both, the passenger cabin as well as the cargo department, located underneath the cabin floor 16. Still further, it is conceivable to integrate into a supporting structure 18 particularly a seat rail, a plurality of wave guides 28.

Said supporting structure 18 particularly the seat rail replaces the separate, distinct cables and forms a part of the network, particularly a WLAN network established within a passenger cabin of underneath a respective cabin floor. Said plurality of guides 28 is provided with individual cross sections to allow for a data transfer of data having different and discrete band widths. For instance, said wave guide 28 may have a cross section as best shown in or in figure 4 respectively, which either can be of squared or of rectangular geometry or even may have a circular or oval cross section. In case that a plurality of wave guides 28 is integrated into supporting structure 18, particularly a seat rail, each wave guide 28 of the plurality of may have different cross section geometry..

The in-flight entertainment system requires a significant lesser power level f or sending the data via the wave guides 28 as compared to a system which is state of the art. The power level used to transmit data via the wave guides 28 is ten times lesser as compared to a WLAN system and 100 times lesser as compared to a mobile phone or a cellular phone, respectively.

Irradiation through said openings into the passenger cabin is minimized and occurs at a very low level only. Data transfer is established substantially within the wave guides 28 having said hollow interior and in case of mechanical failures in the supporting structure 18 particularly a seat rail, the in-flight entertainment system is shut off automatically to prevent the occurrence of a strong irradiation into the passenger cabin. In connection with figure 6, it is noted that the signal outlet 98 on said supporting structure 18 particularly said seat rail, may have a plug with a shielded cable, to minimize irradiation into the area of the passenger cabin.

The in-flight entertainment system uses a transmission technology such as digital broadcasting Terrestrial-Standard (DVB-T or DVB-C) and by use of an internet DVD-T-Bridge either Ethernet or a LAN is established by means of incorporation of said supporting structure, particularly said seat rail 18.

A modulation of data according to figure 6 in the digital modulator 100 is performed by use of Coded Orthogonal Frequency Division Multiplex (COFDM) other modulation methods are conceivable as well.

According to the present invention, said supporting structure 18 comprising the wave guide 28 includes a number of openings 32, for mobile networks. Thus, said supporting structure 18 particularly said seat rail, establishes a distribute antenna system particularly within an aircraft. Said distributed antenna system serves the purpose to receive data via the wave guide 28 of said supporting structure, particularly said seat rail 18. Additional receiving antennas with amplifiers 34 or amplification modules may be applied to increase the quality communication with mobile with mobile devices such as mobile phones or the like

Optionally, frequency changing devices and corresponding antennas are located preferably in the vicinity of seat rails 18 or seat structures 50 as shown in figure 4. Multimedia applications 94 to be received and for communication use one or more of the following techniques: GSM, UMTS, WLAN, Bluetooth etc.

Still further, for the purpose of practicability, said supporting structure, particularly said seat rails are being sealed tightly versus liquids such as beverages or the like, which may spill over the cabin floor 16 of the passenger cabin.

The limitation of the present invention allows for the establishment of a WLAN net within a passenger cabin of a passenger aircraft, using said supporting structure 18, particularly embodied as seat rails 18 as data transferring devices instead of cables, plugs and other components, presently used. Since only one of the supporting structures 18 may be used as a bidirectional mode for transferring data into the direction from the individual passenger seat 10 to the master system 110, 112 and from the master system 110, 112 to the individual passenger seat 10 in a sending mode, the data signals are being separated from each other by implementation of different frequency band width. For redundancy purposes, the second i.e. parallel extending supporting structure 18 and the first mentioned supporting structure 18 may be used. Since advantageously supporting structures the data signals are being transmitted using different frequency band width, within a distance from one in another, the occurrence of interferences is prevented or at least minimized significantly. The WLAN established by use of the present invention in a passenger cabin is powered on a very low power level which in turn allows the minimization of irradiation through the respective openings 32 on top of said supporting structures 18, i.e. particularly on the top of said seat rails 18.

Multi carrier modulation of the data to be transmitted is established preferably by the coded or the canal frequency division multiplex (COFDM-Method) which allows for an uniform distribution a sufficient signal strength and a sufficient separation of different signals addressed to individual passenger seats 10.

### Bezugszeichenliste

- 10: Passenger seat
- 12: Arm rest
- 14: Back rest
- 16: Cabin floor
- 18: Seat rail
- 20: Fitting
- 22: In-seat-entertainment system
- 24: Signal link
- 26: Seat-spacing
- 28: Wave guide
- 30: Cross-section
- 32: Opening
- 34: Amplifying unit
- 36: Transition Area
- 38: Shear-stud
- 40: Clamping section of seat rail
- 42: 1. Data signals
- 44: 1. Transmittal direction
- 46: 2. Data signals
- 48: 2. Transmittal direction
- 50: Seat structure

- 62: Strip-shaped cover
- 64: Coupling wave guide

- 92: Processor
- 94: Multimedia Application
- 96: Reverse channel
- 98: Signal Outlet (Opening 32)
- 100: Digital Modulator
- 102: Bus System
- 110: Master System
- 112: Transceiver
- 114: 1. Paticipant System
- 116: Transceiver
- 118: 2. Paticipant
- 120: Transceiver
- 122: 1. Transition Section
- 124: Coax Cable Connection
- 126: 2. Trasition Section
- 128: Top
- 130: Bottom
- 132: Signal Inlet
- 134: Wireless Connection
- 201: Air gap
- 202: Cover coupling wave guide

## Claims

1. Supporting structure, particularly a seat rail (18), to which passenger seats (10) are mounted, said at least one seat rail (18) having a wave guide (28) for wireless transmission of data signals (42, 46) in at least one direction, said seat rail (18) having openings (32) for the transmission of said data signals (42, 46),
wherein a wave guide (28) of said seat rail (18) and a coupling wave guide (64) of said passenger seat (10) establish a wireless data connection between said supporting structure (18) and said passenger seat (10).

2. Supporting structure according to claim 1, wherein said signal link (24) extends from the wave guide (28) of the seat rail (18) through the opening (32) into the coupling wave guide (64) through the passenger seat (18) to an in-seat-entertainment system (22).

3. Supporting structure according to claim 1, wherein said signal link (24) comprises a cable portion and a wireless portion, respectively.

4. Supporting structure according to one of the preceding claims, wherein said cable connection extends from an amplifying unit (34) of said passenger seat (10) to a component of an in-seat entertainment system (22).

5. Supporting structure according to one of the preceding claims, wherein the signal link (24) comprises a wireless portion comprising a wave guide (28) within said supporting structure (18), particularly a seat rail, coupled via an opening (32) to a coupling wave guide (64) of said passenger seat (10) or the passenger seat structure (50), respectively.

6. Supporting structure according to claim 1, wherein said amplifying unit (34) includes a transition (36) extending to said coupling wave guide (64).

7. Supporting structure according to one of the preceding claims, wherein said transition area (36) is part of the upper region of the coupling wave guide (64).

8. Supporting structure according to one of the preceding claims, wherein said coupling wave guide (64) is a wave guide directional coupler being a part of said passenger seat (10).

9. Supporting structure according to one of the preceding claims, wherein said coupling wave guide (64) is a separate component or part of the passenger seat structure (50).

10. Supporting structure according to one of the preceding claims, wherein said coupling wave guide (64) has a rectangular cross section, has a circular cross section.

11. Supporting structure according to one of the preceding claims, wherein said openings (32) are shaped as longitudinal slots.

12. Supporting structure according to one of the preceding claims, wherein said openings are slotted holes.

13. Supporting structure according to one of the preceding claims, wherein the intensity of the wireless connection established between said wave guide (28) and said coupling wave guide (64) is dependent on the position of the coupling position of respective signals (42, 46) and/or the length of said seat rail (18).

14. Supporting structure according to one of the preceding claims, wherein said openings (32) are being covered by a material (62,) having dielectric properties and mechanically closing set openings (32).

15. Supporting structure according to one of the preceding claims, wherein said openings (32) comprise an electromagnetic shielding, which either is a mechanical closure of non-openings (32).

16. Supporting structure according to one of the preceding claims, wherein the opening (32) selected for data transfer is automatically released whereas non-used openings (32) are electromagnetically shielded by said seat structure (50).

17. Supporting structure according to one of the preceding claims, wherein said transition area (36) extending to said amplifying unit (34) is a e-field or a h-field loop-coupling.

18. Supporting structure according to one of the preceding claims, wherein said amplifying unit (34) comprises the electronic components and includes an Ethernet interface.

19. Method for operating an in-seat-entertainment system (22) integrated in passenger seats (18) arranged within a passenger cabin of an passenger aircraft, applying the following method steps:
a) Wireless transmitting data (42, 46) to and from an in-seat-entertainment system (22) integrated in passenger seats (18) with a wave guide (28),
b) Transmitting said data signals (42, 46) in a bidirectional, simultaneous mode,
c) Amplifying said data signals (42, 46), respectively by an amplifying unit (34),
d) Coupling said amplifying unit (34) via at least one antenna (36) to a comprise wave guide (64) arranged in a seat structure (50) of said passenger seat (10).

20. Method according to claim 19, comprising the step that said data signals (42, 46) are transmitted via a data signal path (24) comprising a wave guide (28) of a supporting structure, particularly a seat rail (18), an opening (32) in said supporting structure (18), a wave guide (64), an transition area (36), an amplifying unit (34) and a cable extending to said in-seat-entertainment system (22).

21. Method according to claim 19, wherein the data transmission is made by the COFDM, by Coded Orthogonal Frequency-Division Multiplex.
